**Europäisches Patentamt**

**European Patent Office**

**Office européen des brevets**

(19)

(11) Veröffentlichungsnummer: **0 164 327**
**A1**

## (12) EUROPÄISCHE PATENTANMELDUNG

(21) Anmeldenummer: **85890057.4**

(22) Anmeldetag: **08.03.85**

(51) Int. Cl.⁴: **F 28 F 9/16,** F 28 F 9/02, F 16 L 41/08, F 24 J 2/46

(30) Priorität: **09.03.84 AT 796/84**
**10.10.84 AT 3220/84**

(43) Veröffentlichungstag der Anmeldung: **11.12.85**
**Patentblatt 85/50**

(84) Benannte Vertragsstaaten: **BE CH DE FR GB LI LU NL SE**

(71) Anmelder: **Netousek, Karl, Kreindlgasse 28, A-1190 Wien (AT)**

(72) Erfinder: **Netousek, Karl, Kreindlgasse 28, A-1190 Wien (AT)**

(74) Vertreter: **Itze, Peter, Dipl.-Ing. et al, Patentanwälte Dipl.-Ing. Leopold Friebel Dipl.-Ing. Peter Itze Zieglergasse 57/11, A-1070 Wien (AT)**

(54) **Anordnung zum Befestigen von Leitungen an Anschlussstutzen und Anwendung an einem Verteilerrohr für Wärmetauscher.**

(57) Die Erfindung bezieht sich auf eine Anordnung zum Befestigen von von unter Druck stehendem, fliessfähigem oder gasförmigem Medium durchströmten, vorzugsweise kleinkalibrigen Leitungen an Anschlusstutzen, von welchen in jede Leitung je einer dichtend hineinragt, wobei Stützwandungen vorgesehen sind, die die Leitungen aussen unter formgleichem Anliegen an dieselben übergreifen, sowie auf ein mit dieser Anordnung versehenes Verteilerrohr für flächige Wärmetauscher.

Zwecks Erzielung einer leicht und rasch erstellbaren und mechanisch sehr belastbaren Befestigung sind die Leitungen (3; 6; 9; 17) sowohl mit dem Anschlussstutzen (2; 15, 16) als auch mit den Stützwandungen (5; 8; 10; 19, 20) verklebt, wobei die in Achsrichtung der Anschlussstutzen (2; 15, 16) gemessene Höhe der Stützwandungen (5; 8; 9; 19, 20) gleich oder geringer ist als die Höhe der Anschlussstutzen (2; 15, 16). Bevorzugt ist dabei bei einem mit dieser Anordnung versehenen Verteilerrohr (11) letzteres in seiner Längsmittelebene durch eine Trennwand (12) in zwei Kammern (13, 14) unterteilt, wobei ein Teil (15) der Anschlussstutzen (15, 16) mit der einen Kammer (13) und der andere Teile (16) der Anschlussstutzen (15, 16) mit der andern Kammer (14) verbunden ist und wobei die andern Enden der Schläuche, Kanäle od. dgl. (18) in ein Sammelrohr oder in Umlenkbögen münden.

BEZEICHNUNG GEÄNDERT
Siehe Titelseite

Anordnung zum Befestigen von von unter Druck stehendem,
fließfähigem oder gasförmigem Medium durchströmten, vorzugsweise kleinkalibrigen Leitungen an Anschlußstutzen,
sowie mit dieser Anordnung versehenes Verteilerrohr für
flächige Wärmetauscher

Die Erfindung bezieht sich auf eine Anordnung zum Befestigen von von unter Druck stehendem, fließfähigem oder
gasförmigem Medium durchströmten, vorzugsweise kleinkalibrigen Leitungen an Anschlußstutzen, von welchen in
jede Leitung je einer dichtend hineinragt, wobei Stützwandungen vorgesehen sind, die die Leitungen außen unter
formgleichem Anliegen an dieselben übergreifen, sowie auf
ein mit dieser Anordnung versehenes Verteilerrohr für
flächige Wärmetauscher.

Bei einer bekannten Anordnung dieser Art ist das Verteilerrohr mehrteilig ausgeführt, wobei ein metallisches
Einsatzrohr vorgesehen ist, in welches stumpf auf Öffnungen aufgesetzte Verbindungsrohre münden, die in die
Verbindungskanäle eines Absorberteiles eingesteckt sind,
und wobei das metallische Einsatzrohr, die Verbindungsrohre und das die Mündungen der Verbindungskanäle aufweisende Ende des Absorberteiles mit Kunststoff umgossen
sind. Eine solche Ausbildung hat dabei außer der durch
die vielen Einzelteile bedingten Umständlichkeit der Herstellung noch den schwerwiegenden Nachteil, daß die einzelnen Teile sehr unterschiedliches thermisches Ausdehn-
und Kontraktionsverhalten zeigen, wodurch es auf die Dauer
zu Undichtheiten im Bereich der Verbindung zwischen den
einzelnen Teilen kommen kann, noch dazu, wo der eingegossene Kunststoffteil alle mechanischen Kräfte, wie
Innendruck, äußerer Winddruck u.dgl. aufnehmen muß.

Der Erfindung liegt die Aufgabe zugrunde, eine Befestigungsanordnung der eingangs genannten Art zu schaffen,die
leicht und rasch erstellbar und mechanisch sehr belastbar
ist. Bevorzugt soll ein Verteilerrohr für flächige Wärme-

tauscher geschaffen werden, mit welchem gleichzeitig die Zuleitung und die Ableitung des Wärmeträgermediums durchgeführt werden kann, denn bisher konnte entweder nur der Zulauf oder nur der Ablauf durch ein Verteilerrohr geführt werden, so daß immer jeweils zwei dieser Verteilerrohre vorhanden sein müssen, was verlangt, daß zu einem der beiden Rohre eine zusätzliche Rohrleitung zu verlegen ist. Letzteres ist aber in manschen Fällen aus baulichen Gründen nicht oder nur schwer möglich.

Erfindungsgemäß wird diese Aufgabe bei einer Anordnung der eingangs genannten Art dadurch gelöst, daß die Leitungen mit den Anschlußstutzen bzw. auch mit den Stützwandungen verklebt sind, wobei die in Achsrichtung der Anschlußstutzen gemessene Höhe der Stützwandungen gleich oder geringer ist als die Höhe der Anschlußstutzen. Das beidseitige Verkleben der Leitungen erbringt die gewünschte Festigkeit der Verbindung, wobei die bei solchen Verklebungen vielfach auftretenden Verschlüsse der Kanäle durch Klebstoffhäute oder -pfropfen durch die angeführten Höhenrelationen vermieden sind.

Dabei kann bei einem mit der erfindungsgemäßen Anordnung versehenen Verteilerrohr für flächige Wärmetauscher das Verteilerrohr in seiner Längsmittelebene durch eine Trennwand in zwei Kammern unterteilt sein, wobei ein Teil der Anschlußstutzen mit der einen Kammer und der andere Teil der Anschlußstutzen mit der andern Kammer verbunden ist, und wobei die andern Enden der Schläuche, Kanäle od.dgl. in ein Sammelrohr oder in Umlenkbögen münden. Dadurch kann das Wärmetauschelement über die gesamte zur Verfügung stehende Fläche ausgelegt werden, da für die Rückführungsleitung kein Platz freigehalten werden muß.

Vorteilhafterweise kann die Trennwand quer zu den Längsachsen der Anschlußstutzen verlaufen, wobei ein Teil der Anschlußstutzen mit der Trennwand dicht verbunden ist und die mit den übrigen Anschlußstutzen verbundene Kammer durchsetzt, wodurch eine gleichsinnige Anordnung der An- schlußstutzen an einer Seite des Verteilerrohres ermöglicht ist. Dabei können die Anschlußstutzen in einer Reihe und mit zueinander parallelverlaufenden Achsen angeordnet sein, was den Anschluß eines plattenförmigen Wärmetauschelements auf besonders einfache Weise ermöglicht. Weiters kann die erste Hälfte der in der Reihe liegenden Anschlußstutzen mit der einen Kammer und die zweite Hälfte der Anschlußkammer unter Durchsetzen der einen Kammer mit der andern Kammer verbunden sein, was eine besonders einfache Fertigung des Verteilerrohres ergibt.

In der Zeichnung sind verschiedene Ausführungsbeispiele von mit der erfindungsgemäßen Befestigungsanordnung versehenen Verteilerrohren dargestellt.

Fig. 1 zeigt eine Draufsicht auf ein Verteilerrohr, wobei die an letzteres angeschlossenen Leitungen nach Linie I-I der Fig. 2 geschnitten sind.

Fig. 2 gibt einen Querschnitt nach Linie II-II der Fig. 1 wieder.

Fig. 3 ist eine der Fig. 1 analoge Draufsicht, jedoch bei anders geformten Leitungen, u.zw. bei in einer außen ebenen Platte angeordneten, etwa rechteckigen Querschnitt aufweisenden Kanälen.

Fig. 4 veranschaulicht ebenfalls eine der Fig. 1 analoge Draufsicht, jedoch bei einer solchen Ausführungsform, bei welcher die Leitungen durch einzelne, gegebenenfalls örtlich miteinander verbundene Schläuche gebildet sind. Die Querschnitte bei den Ausführungsformen nach den Fig. 3 und 4 entsprechen grundsätzlich dem in Fig. 2 dargestellten Querschnitt.

Fig. 5 zeigt einen Längsschnitt durch eine bevorzugte Ausführungsvariante des Verteilerrohres, u.zw. für einen flächigen Wärmetauscher.

Fig. 6 ist ein Schnitt nach Linie VI-VI und Fig. 7 ein Schnitt nach Linie VII-VII der Fig. 5.

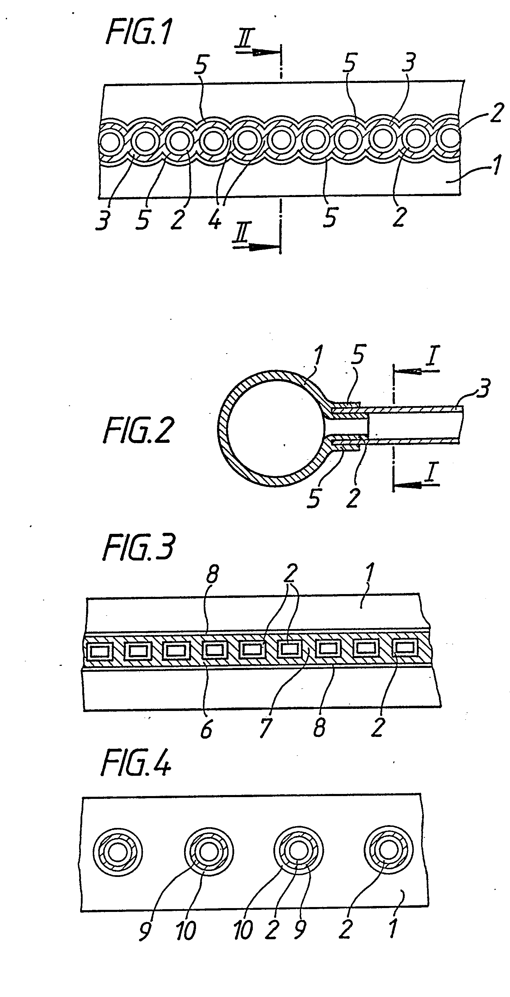

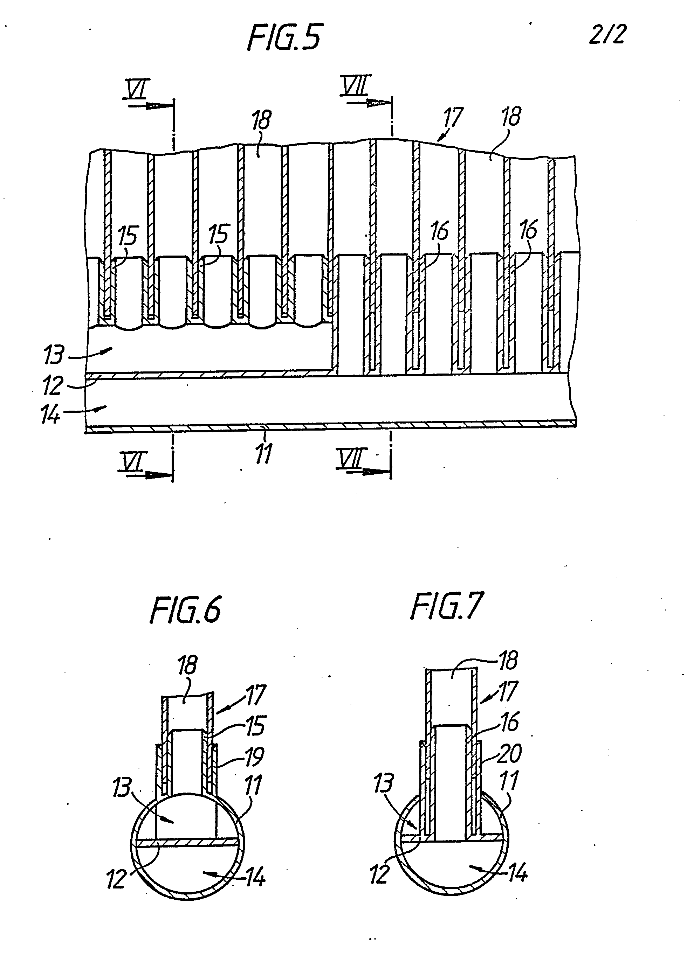

Bei den Ausführungsbeispielen gemäß den Fig. 1 bis 4 sind die einander entsprechenden Teile mit gleichen Bezugszeichen versehen. Das Verteilerrohr 1 ist mit Anschlußstutzen 2 versehen, auf welche die angeschlossenen Leitungen aufgesteckt sind. Beim Ausführungsbeispiel nach Fig. 1 und 2 sind die Leitungen als zylindrische, entlang diametral gegenüberliegenden Erzeugenden der Außenmantelfläche miteinander direkt verbundene Schläuche 3 ausgebildet, wobei die Anschlußstutzen in einer parallel zur Längsachse des Verteilerrohres verlaufenden Reihe angeordnet sind. Der Abstand der Außenwandungen der Anschlußstutzen 2 entspricht dabei etwa der Dicke der zwei benachbarte Leitungen bildende Schläuche 3 trennenden Wandung 4, was bei vorliegendem Ausführungsbeispiel etwa der doppelten Dicke der Wandung der die Leitungen bildenden Schläuche 3 entspricht. In einem etwa der Dicke der Wandung der die Leitungen bildenden Schläuche 3 entsprechenden Abstand sind Stützwandungen 5 vorgesehen, welche mit ihrer Innenseite an der Außenwandung der Leitungen formgleich anliegen. Die Stützwandungen 5 sind dabei durch miteinander verbundene, gleichsinnig gekrümmte, koaxial mit den Anschlußstutzen 2 angeordnete Zylindermantelabschnitte gebildet, deren Bogenlänge geringer als die eines Halbkreises ist. Zur dauerhaften Befestigung der Leitungen an dem Verteilerrohr 1 sind die die Leitungen bildenden Schläuche 3 sowohl mit den Anschlußstutzen 2 als auch mit den Stützwandungen 5 verklebt.

Beim Ausführungsbeispiel nach Fig. 3 sind die Leitungen durch in einer von ebenen Außenflächen begrenzten, starren oder flexiblen Platte 6 angeordnete, in vorliegendem Fall rechteckigen Querschnitt aufweisende Kanäle gebildet, wobei diese Kanäle durch Zwischenwandungen 7 voneinander getrennt sind. Die Anschlußstutzen 2 weisen dabei gleichfalls etwa rechteckigen Querschnitt auf. Die mit 8 bezeichneten Stützwandungen sind dabei als durchgehende, ebene, parallel zur Längsachse des Verteilerrohres 1 verlaufende Wandungen gebildet.

Beim Ausführungsbeispiel nach Fig. 4 sind die Leitungen durch voneinander getrennte Schläuche 9 gebildet, wobei die Stützwandungen als zylindrische, koaxial zu den zylindrischen Anschlußstutzen 2 angeordnete Manschetten 10 ausgebildet sind, deren Innenwandungen von den Außenwandungen der Anschlußstutzen 2 in einem der Dicke der Wandung der Schläuche 9 entsprechenden Abstand entfernt sind.

Bei allen dargestellten Ausführungsbeispielen ist es wesentlich, daß die Höhe der Stützwandungen 5; 8; 10 gleich oder geringer als die Höhe der Anschlußstutzen 2 ist.

Bei dem Ausführungsbeispiel nach den Fig. 5 bis 7 ist das Verteilerrohr 11 durch eine Trennwand 12 in zwei Kammern 13, 14 unterteilt. An dem Verteilerrohr 11 sind Anschlußstutzen 15, 16 angesetzt, von denen die eine Hälfte, nämlich die Anschlußstutzen 15, mit der Kammer 13 und die andere Hälfte, nämlich die Anschlußstutzen 16, mit der anderen Kammer 14 in Verbindung stehen. Die Anschlußstutzen 15, 16 sind dabei in einer Reihe angeordnet, wobei ihre Längsachsen parallel zueinander in der Längsmittelebene des Verteilerrohres 11 liegen. Die Anschlußstutzen 16 durchsetzen die Kammer 13 und sind an der Trennwand 12 dicht angeschlossen. Mit 17 ist ein Wärmetauschelement bezeichnet, in welchem parallel zueinander verlaufende, von Kante zu Kante durchgehende Kanäle 18 vorgesehen sind, in welche die Anschlußstutzen 15, 16 dichtend hineinragen. Im Bereich der Anschlußstutzen 15, 16 ist die Außenfläche des Wärmetauschelements 17 durch Stützwandungen 19, 20 übergriffen, wobei die den Anschlußstutzen 15 zugeordneten Stützwandungen 19 von der Außenwandung des Verteilerrohres 11 und die den Anschlußstutzen 16 zugeordneten Stützwandungen 20 von der Trennwand 12 ausgehen. Die Stützwandungen 19, 20 liegen dabei mit ihren den Anschlußstutzen zugewandten Innenseiten formgleich an der Außenwandung des Wärmetauschelements 17 an.

Auch beim Ausführungsbeispiel nach den Fig. 5 bis 7 kann das Wärmetauschelement durch einzeln verlegte bzw. über ihre Mantelflächen im Bereich einander berührender Erzeugender unmittelbar verbundene Schläuche gebildet sein, wobei dann die Innenwandung der Stützwandungen 19, 20 entsprechend der Außenwandung des Wärmetauschelements zu formen sind.

Wie bei den Ausführungsbeispielen nach den Fig. 1 bis 4 ist beim Ausführungsbeispiel nach den Fig. 5 bis 7 das Wärmeaustauschelement 17 mit dem Verteilerrohr 11 verklebt, wobei die Anschlußstutzen 15, 16 länger sind als die zugehörigen Stützwandungen 19, 20, was, wie schon angeführt, ein Eindringen von Klebstoff in das Innere der Kanäle 18 verhindert.

Es könnten unter bestimmten Voraussetzungen die Stützwandungen weggelassen, das Wärmetauschelement auf die Anschlußstutzen bis zur Außenwandung des Verteilerrohres aufgeschoben und der an die Außenwandung des Verteilerrohres anliegende Rand des Wärmetauschelements mit der zugehörigen Außenwandung verschweißt oder mit aushärtendem Kleber umspritzt sein.

Zur Erstellung der erfindungsgemäßen Befestigungsanordnung wird bei allen Ausführungsbeispielen in gleicher Weise vorgegangen, u.zw. wird in die Zwischenräume zwischen den Anschlußstutzen 2; 15, 16 und den Stützwandungen 5, 8; 19,20 Klebstoff eingebracht, wonach dann die Leitungen, also die miteinander parallelliegend verbundenen Schläuche 3, bzw. die Platte 6; 17 oder die einzeln liegenden Schläuche 9 auf die Anschlußstutzen 2; 15, 16 aufgeschoben werden. Der Klebstoff verteilt sich dabei sowohl an den Anlageflächen der Leitungen an die Anschlußstutzen als auch an den Anlageflächen der Leitungen an die Stützwandungen, wobei insbesondere durch die gewählte Höhe der Anschlußstutzen ein Eindringen von Klebstoff in die Anschlußstutzen und damit ein Verlegen derselben verhindert ist.

Die erfindungsgemäße Anordnung zum Befestigen von Leitungen eignet sich vor allem auch für die Herstellung von Sonnenkollektoren. Dabei kann eine Zuleitung und eine wie diese gleich aufgebaute Ableitung für das Wärmeträgermedium durch parallel zueinander angeordnete Leitungen verbunden sein, wobei die Befestigung dieser Leitungen an der Zuleitung und an der Ableitung entsprechend der Erfindung durchgeführt ist. Es kann aber auch die Zuleitung und die Ableitung in einem durch eine Wand in zwei Kammern unterteilten Verteilerrohr erfolgen.

0164327

Patentansprüche

1. Anordnung zum Befestigen von von unter Druck stehendem, fließfähigem oder gasförmigem Medium durchströmten, vorzugsweise kleinkalibrigen Leitungen an Anschlußstutzen, von welchen in jede Leitung je einer dichtend hineinragt, wobei Stützwandungen vorgesehen sind, die die Leitungen außen unter formgleichem Anliegen an dieselben übergreifen, dadurch gekennzeichnet, daß die Leitungen (3;6;9;17) mit dem Anschlußstutzen (2;15,16) bzw. auch mit den Stützwandungen (5;8;10;19,20) verklebt sind, wobei die in Achsrichtung der Anschlußstutzen (2;15,16) gemessene Höhe der Stützwandungen (5;8;10;19,20) gleich oder geringer ist als die Höhe der Anschlußstutzen (2; 15,16).

2. Mit der Anordnung gemäß Anspruch 1 versehenes Verteilerrohr für flächige Wärmetauscher, wie Sonnenkollektoren, Fußbodenheizplatten u.dgl., wobei an das Verteilerrohr das Wärmetauschelement, wie Schläuche, mit Kanälen versehene Platten od.dgl., über dicht in die Innenräume des Wärmetauschelements hineinragende Anschlußstutzen angeschlossen ist, dadurch gekennzeichnet, daß das Verteilerrohr (11) in seiner Längsmittelebene durch eine Trennwand (12) in zwei Kammern (13,14) unterteilt ist, wobei ein Teil (15) der Anschlußstutzen (15,16) mit der einen Kammer (13) und der andere Teil (16) der Anschlußstutzen (15,16) mit der andern Kammer (14) verbunden ist, und wobei die andern Enden der Schläuche, Kanäle od.dgl. (18) in ein Sammelrohr oder in Umlenkbögen münden.

3. Verteilerrohr nach Anspruch 2, dadurch gekennzeichnet, daß die Trennwand (12) quer zu den Längsachsen der Anschlußstutzen (15,16) verläuft, wobei ein Teil (16) der Anschlußstutzen (15,16) mit der Trennwand (12) dicht verbunden ist und die mit den übrigen Anschlußstutzen (15) verbundene Kammer (13) durchsetzt.

0164327

4. Verteilerrohr nach Anspruch 2 oder 3, dadurch gekennzeichnet, daß die Anschlußstutzen (15,16) in einer Reihe und mit zueinander parallelverlaufenden Achsen angeordnet sind.

5. Verteilerrohr nach Anspruch 4, dadurch gekennzeichnet, daß die erste Hälfte (15) der in der Reihe liegenden Anschlußstutzen (15,16) mit der einen Kammer (13) und die zweite Hälfte (16) der Anschlußstutzen (15,16) unter Durchsetzen der einen Kammer (13) mit der andern Kammer (14) verbunden ist.

FIG.1

FIG.2

FIG.3

FIG.4

FIG.5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 512 191 (SUDDEUTSCHE KUHLER FABRIK) <br> * Seite 11, Zeilen 9-21; Seite 11, Zeilen 25-28; Figuren 10,11 * | 1 | F 28 F 9/16 <br> F 28 F 9/02 <br> F 16 L 41/08 <br> F 24 J 2/46 |
| Y | EP-A-0 029 859 (FORD) <br> * Seite 4, Zeile 27 - Seite 5, Zeile 14; Seite 5, Zeile 23 - Seite 6, Zeile 6; Figuren 1,4-9 * | 1 | |
| A | | 2,4,5 | |
| A | US-A-1 822 715 (UDELL) <br><br> * Seite 1, Zeilen 44-77; Figuren * | 1,2,4,5 | |
| Y | FR-A-2 194 934 (AIR-INDUSTRIE) <br> * Seite 3, Zeilen 16-19; Seite 3, Zeile 34 - Seite 4, Zeile 4; Seite 4, Zeilen 34-39; Figur 2 * | 1 | RECHERCHIERTE SACHGEBIETE (Int. Cl.4) <br><br> F 28 F <br> F 16 L <br> F 24 J <br> F 28 D |
| A | | 4 | |
| Y | EP-A-0 000 189 (FORD) <br> * Seite 5, Zeile 17 - Seite 6, Zeile 17; Seite 9, Zeilen 1-9; Figuren * | 1 | |
| A | | 4 | |

--- -/-

Der vorliegende Recherchenbericht wurde für alle Patentansprüche erstellt.

| Recherchenort <br> DEN HAAG | Abschlußdatum der Recherche <br> 17-06-1985 | Prüfer <br> KLEIN C. |
|---|---|---|

**Europäisches Patentamt**

## EUROPÄISCHER RECHERCHENBERICHT

EP 85 89 0057

| | EINSCHLÄGIGE DOKUMENTE | | Seite 2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CA-A-1 083 451 (KERR)<br>* Seite 3, Zeilen 18-25; Figuren 1,3 * | 2 | |
| A | GB-A- 422 571 (HOWLETT)<br>* Seite 3, Zeilen 28-49; Figur 2 * | 2,3 | |
| A | FR-A-2 091 935 (TREPAUD)<br>* Seite 8, Zeilen 36-40; Figuren 3,12 * | 2,3 | |
| A | GB-A-1 505 836 (BRITISH LEYLAND) | | |
| A | WO-A-8 002 590 (HASTWELL) | | |
| A | US-A-4 396 060 (SCHENK) | | |

RECHERCHIERTE SACHGEBIETE (Int. Cl.4)

Der vorliegende Recherchenbericht wurde für alle Patentansprüche erstellt.

| Recherchenort<br>DEN HAAG | Abschlußdatum der Recherche<br>17-06-1985 | Prüfer<br>KLEIN C. |
|---|---|---|